# EUROPEAN PATENT APPLICATION

(11) **EP 4 604 622 A1**
(43) Date of publication of application: **20.08.2025**
(21) Application number: 24158176.8
(22) Date of filing: 16.02.2024
(51) Int. Cl.: H04W 52/02, H04L 5/00, H04W 56/00

(54) **COMMUNICATION APPARATUS AND BASE STATION INVOLVED IN SIGNAL ADAPTATION**

(71) Applicant: Panasonic Intellectual Property Corporation of America, Torrance, CA 90504 (US)
(72) Inventor: LI, Hongchao, 63225 Langen (DE); KURUVATTI, Nandish, 63225 Langen (DE); HORIUCHI, Ayako, Osaka, 571-8501 (JP); SUZUKI, Hidetoshi, Osaka, 571-8501 (JP)
(74) Representative: Grünecker Patent- und Rechtsanwälte PartG mbB

(57) **Abstract**

Provided are a communication apparatus, a base station, and methods for a communication apparatus and for a base station. The communication apparatus comprises a receiver which, in operation, receives an indication indicating: whether a common signal or a transmission occasion is available for a cell, whether the cell is activated or deactivated, or whether SSB-less operation in the cell is activated or deactivated; and circuitry which, in operation, determines, based on the received indication, whether the common signal or the transmission occasion is available for the cell or whether activation of the cell or SSB-less operation is initiated or extended.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

In an embodiment, the techniques disclosed here feature a communication apparatus comprising a receiver which, in operation, receives an indication indicating: whether a common signal or a transmission occasion is available for a cell, whether the cell is activated or deactivated, or whether SSB-less operation in the cell is activated or deactivated; and circuitry which, in operation, determines, based on the received indication, whether the common signal or the transmission occasion is available for the cell or whether activation of the cell or SSB-less operation is initiated or extended.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

- **Fig. 1**: shows an exemplary architecture for a 3GPP NR system;
- **Fig. 2**: illustrates SSB-less operation;
- **Fig. 3**: is a block diagram of a communication apparatus and a base station;
- **Fig. 4**: is a block diagram of exemplary circuitry of a communication apparatus;
- **Fig. 5**: is a block diagram of exemplary circuitry of a base station;
- **Fig. 6**: is a flow chart showing method steps for a communication apparatus;
- **Fig. 7**: is a flow chart showing method steps for a base station;
- **Figs. 8-12**: show exemplary structures of signals for signal availability and/or cell activation switching;
- **Fig. 13**: illustrates activation/deactivation of SCells and SSB availability switching;
- **Fig. 14**: shows exemplary functional split options in 5G O-RAN.

### DETAILED DESCRIPTION

### 5G NR system architecture and protocol stacks

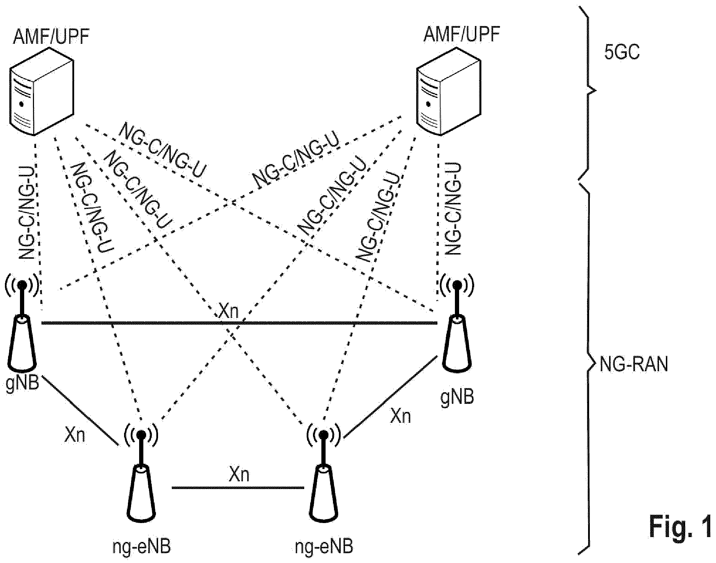

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Network energy saving (NES)

In telecommunications networks, network energy saving (NES) has been identified as an important issue with regard to environmental sustainability, to reduce environmental impact (greenhouse gas emissions), and for operational cost savings. In 3GPP 5G Release 19, work items for NES have been formulated including the following four features (see e.g. RP-234065, "New WID: Enhancements of network energy savings for NR", section 4).

Firstly, procedures and signaling method(s) are to be specified to support on-demand SSB (synchronization signal block) SCell (Secondary cell) operation for UEs (user equipments) in connected mode configured with carrier aggregation (CA), for both intra-/inter-band CA. This includes selection of triggering method(s) such as UE uplink wake-up-signal using an existing signal/channel, cell on/off indication via backhaul, and SCell activation/deactivation signaling. It is noted that on-demand SSB transmission can be used by UE for at least SCell time/frequency synchronization, L1/L3 (layer 1 / layer3) measurements and SCell activation, and is supported for FR1 (frequency range 1, including sub-6 GHz frequency bands) and FR2 (including frequency bands from 24.25 GHz to 71.0 GHz) in non-shared spectrum.

Secondly, procedures and signaling method(s) are to be studied to support on-demand SIB1 (system information block) for UEs in idle/inactive mode. This includes triggering method by uplink wake-up-signal using an existing signal/channel, wake-up-signal configuration provisioning to UE, and information exchange between gNBs at least for the configuration of wake-up signal, if necessary.

Thirdly, adaptation of common signal/channel transmissions is to be specified, including adaptation of SSB in time domain, e.g. adapting periodicity, and adaptation of PRACH in time domain (a further issue for study and possible specification is adaptation of PRACH (physical random access channel) in spatial domain, e.g. non-uniform PRACH resources per SSB), and adaptation of paging occasions including confining the paging occasions in the time domain. Therein, it is desirable to have no negative impact to legacy UEs, unless significant benefits are shown.

Fourthly, the corresponding core requirements for the above features are to be specified.

In view of the above, the inventors have noted that ON/OFF switching of SSB and SIB1 and time domain adaptation of SSB and other common channels (e.g. paging, PRACH) are a focus of Release 19 NES (network energy saving) enhancement.

### SCell SSB-less operation

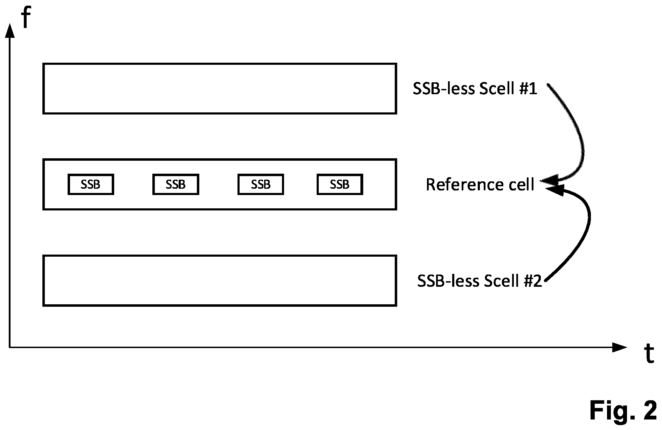

In 3GPP 5G Release 18, SSB-less operation has been studied as a feature supported for intra-band CA as well as inter-band CA for FR1 (see e.g. R4-2318190, "Topic summary for [109][234] Netw_Energy_NR"). In SSB-less operation, as illustrated in **Fig. 2****,** one or more cells, in particular a secondary cell (SCell) or SCells with SSB-less operation are configured with a "reference cell". The reference cell has the SSB (synchronization signal block) for the SSB-less SCell(s). This means that the SSB is transmitted in the reference cell rather than the SSB-less cell. A UE connected to the SSB-less cell can receive the SSB and perform synchronization based on the SSB in particular when the UE is located in an area of overlapping cell coverage areas of the SSB-less cell and the reference cell. In addition to having the SSB, the reference cell can also be the timing reference and the automatic gain control (AGC) training source of the SSB-less SCell. In addition, the reference cell may be a source cell for QCL (quasi-co-location). QCL mesns that transmissions using different antenna ports have common channel characteristics such as Doppler Shift, Doppler Spread, Average Delay, Delay Spread, and/or Spatial Receiver Characteristics.

The reference cell can be either a PCell (primary cell) or a SCell (secondary cell).

The PCell is a cell that serves the primary component carrier, and the SCells are cells that serves secondary component carriers, which supplement the primary component carrier in carrier aggregation to increase bandwidth. Resources in an SCell may be used for the data and/or control channels and other signals as per the configuration and scheduling, for UE to transmit, receive and/or perform measurements.

### Further issues

In view of the above, the inventors have considered several issues related to network-side (e.g. gNB-side) triggering of SSB, SIBs (system information blocks), paging signaling, physical random access channel (PRACH) and other signaling, particularly common signals for a cell or cell group.

Firstly, the inventors have identified a need for defining signaling and procedure(s) to facilitate common channel adaptation of common channels such as the aforementioned SSB, SIB1, paging and PRACH. This includes e.g. on-demand SSB activation and deactivation and/or SIB1 ON/OFF switching. In view of this, the present disclosure provides such signaling and procedures for network side triggering (e.g. by the gNB). In the proposed techniques, SCell activation / deactivation can either be coupled or decoupled with SSB ON/OFF switching.

Further, an issue to be addressed is the impact on the SSB-less SCell when on-demand SSB and SSB-less operation are both configured. In view of this, the present disclosure provides signaling for activation / deactivation of SSB-less operation.

In addition, an issue considered by the inventors is that when an SCell switches the SSB from ON to OFF, i.e., from the normal operation to SSB-less operation, the reference cell needs to be timely associated to the SCell. In view of this, the present disclosure provides signaling for reference cell activation and switching.

In addition to the above network-related triggering, other issues to be considered concern UE-side triggering.

In particular, an issue related to UE-side triggering is how the UE can trigger, report, request, and/or send assistance information to network to facilitate the NES operation in a timely and dynamic manner. In view of this, in addition to the above-mentioned network-related approaches, a UE-side triggering/request may be defined.

A further issue related to UE-side triggering is to define UE side triggering conditions in which the UE shall shall trigger/request/report to network to switch the SSB or SIB1 (or the common signals such as the above-mentioned ones) ON.

The present disclosure is particularly directed to the network-side triggering techniques which can be implemented independently of UE-side triggering, but may be combined with UE-side triggering techniques.

In particular, the present disclosure provides techniques where the UE receives the indication from gNB regarding the on-demand SSB availability and/or other switchable settings for one or more cells. The indication may include one or more of SSB ON/OFF, SCell deactivation/deactivation, Cell DTX (discontinuous transmission) activation/deactivation, SCell dormancy indication, SCell SSB-less operation activation/deactivation, and/or an indication of a reference cell of SSB-less indication. When receiving the indication, the UE applies the on-demand SSB and assumes the SSBs to be available, if indicated available.

### Embodiments

In view of the above, the present disclosure provides techniques related to common channel or signal adaptation or switching.

The present disclosure in particular provides base stations, which may include scheduling devices or scheduling apparatuses (such as scheduling nodes), corresponding methods for base stations, communication devices or communication apparatuses (e.g. adapted/configured to perform the function of a communication terminal in a communication system), corresponding methods and (computer) programs (e.g. stored on a memory) for communication devices (or apparatuses), communications systems comprising such scheduling devices and communication devices, as well as integrated circuits which, in operation, control a processes of scheduling devices/communication devices to perform the respective methods.

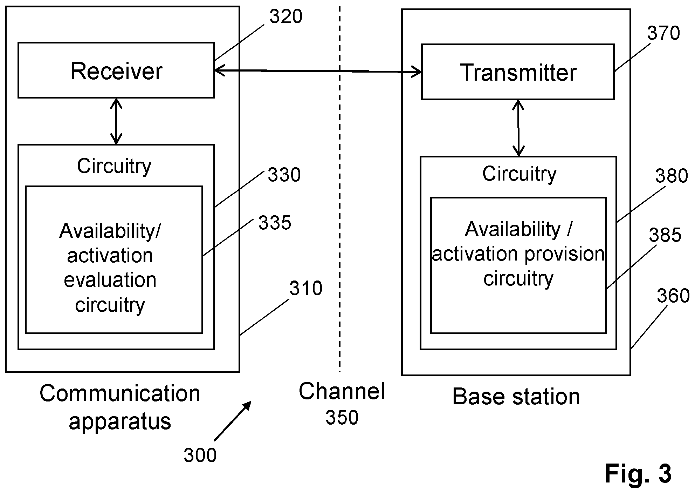

An example of such communication system is illustrated in **Fig. 3****.** The communication system 300 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 3** illustrates a general, simplified and exemplary block diagram of a communication apparatus 310 (which may be exemplarily assumed to be a user equipment (UE) or communication terminal or communication apparatus) and a scheduling device or scheduling node (here exemplarily assumed to be located in a base station 360, e.g. in a LTE eNB (alternatively termed ng-eNB) or the gNB in 5G NR) in the communication system 300. However, in general, a scheduling device may also be a terminal in case of a sidelink connection between two terminals. Moreover, in particular with respect to the use cases of URLLC (ultra leliable low latency communication), eMBB (enhanced mobile broadband), and mMTC (massive machine type communication), the communication device 310 may also be a sensor device, a wearable device, or a connected vehicle, or a controller of an automated machine in an industrial factory.

As illustrated in **Fig. 3****,** the communication device 310 and the scheduling device 360 (eNB/gNB) may communicate with each other over a (wireless) physical channel 350 respectively using their transceivers 320 (communication terminal side) and 370 (base station side). Together, the scheduling device 360 and the communication apparatus 310 may form the communication system 300. The communication system 300 may further include other entities such as those shown in **Fig. 1** and, e.g. a plurality of UEs connected to the scheduling node or a relay node relaying signals to/from the base station from/to one or more UEs.

As illustrated in **Fig. 3****,** the communication device 310 may comprise a receiver 320 (e.g. a transceiver) and circuitry (or processing and/or control circuitry) 330, and the scheduling device 360 may comprise a transmitter 330 (e.g. a transceiver) and (processing and/or control) circuitry 380.

The term ***"transceiver"*** refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

In the present disclosure, the expressions "UE" and "gNB" before "circuitry", "transmitter", "receiver" and "transceiver" may be used for short to distinguish the transceivers and circuitries of a communication apparatus 310 and a base station 360, without implying any limitation to networks such as 3GPPP NR networks.

As shown in **Fig. 3****,** provided is a communication apparatus 310. The communication apparatus comprises a receiver 320 and circuitry 330. The receiver, in operation, receives an indication indicating one or more settings out of the following settings:
- whether a common signal or a transmission occasion is available for a cell,
- whether the cell is activated or deactivated, or
- whether SSB-less operation in the cell is activated or deactivated.

Based on the received indication, the circuitry, in operation, determines whether the common signal or the transmission occasion is available for the cell or whether activation of the cell or SSB-less operation is initiated or extended.

Also provided, as shown in **Fig. 3****,** is a base station 360. The base station comprises a transmitter 370 and circuitry 380. The circuitry 380, in operation, determines whether to make available a common signal or a transmission occasion for a cell or whether to initiate or extend activation of the cell or SSB-less operation in the cell. The transmitter 370, in operation, transmits an indication indicating one or more settings out of the following settings:
- whether the common signal or the transmission occasion is available for the cell,
- whether the cell is activated or deactivated, or
- whether SSB-less operation in the cell is activated or deactivated.

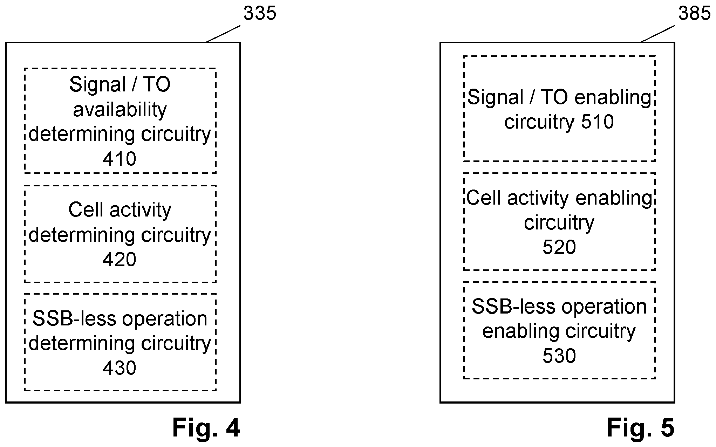

The UE circuitry 330 is exemplarily considered to comprise availability / activation evaluation circuitry 335, which, in operation, determines whether the common signal or the transmission occasion is available for the cell or whether activation of the cell or SSB-less operation is initiated or extended. As is further shown in **Fig. 4****,** availability / activation evaluation circuitry 335 may comprise one or more circuitries out of: signal or TO (transmission occasion) availability determining circuitry 410 responsible for determining whether a common signal or transmission occasion is available, cell activity determining circuitry 420 which may be responsible for determining whether the cell is activated, deactivated, or whether activation is to be extended, and/or SSB-less operation circuitry responsible for determining whether SSB-less operation is activated, deactivated or extended.

The gNB circuitry is exemplarily considered to comprise availability / activation provision circuitry 385, which, in operation, determines whether to make available a common signal or a transmission occasion for a cell or whether to initiate or extend activation of the cell or SSB-less operation in the cell. As is further shown in **Fig. 5****,** availability / activation provision circuitry 385 may comprise one or more circuitries out of: signal / TO enabling circuitry 510 responsible for making available a common signal or a transmission occasion, cell activity enabling circuitry 520 responsible for determining whether to initiate or extend activation of the cell and/or SSB-less operation enabling circuitry 530 responsible for determining whether to initiate or extend activation of the SSB-less operation for a cell.

It is, however, noted that the UE circuitries 330, 335, and 410 to 430 as well as gNB circuitries 380, 385 and 510 to 530 may implement more functionality than the above-mentioned, and the functionalities mentioned above are in general implemented by circuitries 330 and 380 without being limited to the respective circuitries 335 and 410 to 430 or 385 and 510 to 530 described above.

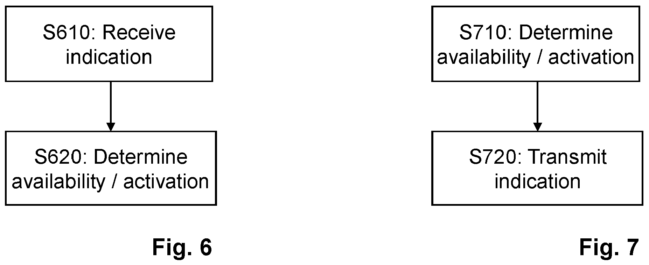

In correspondence with the above-described communication apparatus 310, provided is a communication method for a communication apparatus. As shown in **Fig. 6****,** the method comprises: a step S610 of receiving an indication indicating one or more settings out of the following settings:
- whether a common signal or a transmission occasion is available for a cell,
- whether the cell is activated or deactivated, or
- whether SSB-less operation in the cell is activated or deactivated.

The method further comprises a step S620 of determining, based on the received indication, whether the common signal or the transmission occasion is available for the cell or whether activation of the cell or SSB-less operation is initiated or extended.

Moreover, in correspondence with the above-described base station 360, provided is a communication method for a base station, as shown in **Fig. 7****,** the communication method comprises a step S710 of determining whether to make available a common signal or a transmission occasion for a cell or whether to initiate or extend activation of the cell or SSB-less operation in the cell. The method further comprises a step S720 of transmitting an indication indicating one or more of the following settings:
- whether the common signal or the transmission occasion is available for the cell,
- whether the cell is activated or deactivated, or
- whether SSB-less operation in the cell is activated or deactivated.

The above-mentioned "common signal" may be a synchronization signal (e.g. SSB), a reference signal (e.g. channel-state information reference signal (CSI-RS), a control signal, or system information (e.g. SIB1).

Furthermore, the common-signal may be a switchable "on-demand" signal which is switchable between states ON or OFF in accordance with traffic, cell usage, cell occupation, channel quality and other requirements such as QoS related requirements.

If the indication indicates availability of a common signal, the communication method for the communication apparatus may further include a step of receiving the common signal in accordance with the indication if it is indicated as being available (e.g. performed by UE transmitter 320). Correspondingly, the communication method for the base station may comprise a step of transmitting the common signal (which may be performed by gNB transmitter 370).

Moreover, the "transmission occasion" (or TO) may be a transmission occasion for an uplink signal such as a control signal (e.g. physical random access channel (PRACH) or physical uplink control channel (PUCCH)) or reference signal.

If the indication indicates availability of a TO, the communication method for the communication apparatus may further comprise transmitting the uplink signal on the available TO (e.g. performed by a transceiver as UE receiver 320). Correspondingly, the method for the base station may include a step of receiving the uplink signal on the TO (e.g. performed by a transceiver as the gNB transmitter 370).

The cell that is indicated to be activated or deactivated may be a secondary cell (SCell).

In such case, the communication side and base station side methods may further comprise steps of performing communication (e.g. transmission and/or reception of data, e.g. on the uplink, downlink, or sidelink) using the secondary cell. If the indication is received while the cell is already in an active state, the indication may indicate extension of a period of activity of the cell (e.g. by a configured duration or a duration indicated by the indication).

Furthermore, if the indication indicates activation or deactivation of SSB-less operation, the communication methods of communication apparatus and base station may further include transmitting, by base-station (e.g. using its transmitter 370 or transceiver) and receiving, by the communication apparatus(e.g. using its receiver 320 or transceiver). The SSB may be received either in a reference cell (e.g. if SSB-less operation is activated) or in the cell for which the indication is made (e.g. if SSB-less operation is deactivated). If SSB-less operation is already activated when the signal is received, the signal may indicate extension of the SSB-less operation (e.g. by a configured duration or a duration indicated by the indication).

In some embodiments, the indication is an explicit indication, which may be included in a physical downlink control channel (PDCCH), a medium access control (MAC) control element (CE), or radio resource control (RRC) signaling, or in some other control signaling.

The indication (or the signal including the indication) may include a cell index of the cell index for which the indication (signal or TO ON/OFF / deactivation, cell (de-)activation, or SSB-less operation (de-)activation) is made. The UE may receive indications respectively for a plurality of SCells.

Moreover, the indication may include an index of a reference cell where the common signal is to be made available, or a reference cell where a transmission occasion is made available.

It is noted that candidates of reference cell indices for an SCell with SSB-less operation may be RRC configured.

The reference cell index may be included possibly, but not necessarily in addition to the aforementioned cell index of the cell itself. E.g. an index of a reference cell may be included in case the indication indicates SSB-less operation and the common signal is a SSB.

In general, the present disclosure provides an indication for at least one out of the following settings already mentioned above: whether a common signal or a transmission occasion is available for a cell, whether the cell is activated or deactivated (or activation extended), or whether SSB-less operation in the cell is activated or deactivated (or activation extended).

However, the indication, in particular if provided as an explicit indication in a control signal, may be provided in combination with other settings: including:
- whether or not the common signal or the transmission occasion is available for the cell,
- whether the cell is activated or deactivated,
- whether SSB-less operation in the cell is activated or deactivated;
- whether the cell is dormant or non-dormant, or
- whether discontinuous transmission (DTX) and/or reception (DRX) in the cell is activated or deactivated.

In particular, one of the first three of the above-settings may be combined with any one or more among the above-listed settings or some other setting that may be signaled.

Such combination may be signaled either by providing a plurality of indicators (e.g. one bit indicators) each indicating respective activation or deactivation of one of the settings to be signaled. Alternatively, such an indication may be made as a joint indication (e.g. a one-bit indicator for jointly (or commonly activating or deactivating two or more settings) or a more-bit indicator of at least two bits that map to possible activation and deactivation combinations for more than one of the settings.

In the following, several examples are shown where the UE receives an explicit indication. In some examples, the indication is carried by a PDCCH, the examples are also applicable to a case where the indication is carried by a MAC CE, RRC, or other signaling.

The PDCCH may be a group-common PDCCH (e.g. common to a plurality of UEs, e.g. UEs using a cell) or a PDCCH specific to the communication apparatus 310.

According to one example, the UE receives a PDCCH indicating SCell indices as well as an ON/OFF indication (e.g. activation or deactivation) of the SSB (or another common signal or of a TO for an uplink control signal).

The PDCCH may be a new DCI (downlink control information) format, or it may be an extension of an existing format, possibly a DCI format for a group-common PDCCU, such as DCI formats DCI format 2_0, 2_6, 2_7, 2_9, or DCI format 0_1 (for paging). Alternatively, the PDCCH may be a UE-specific DCI format.

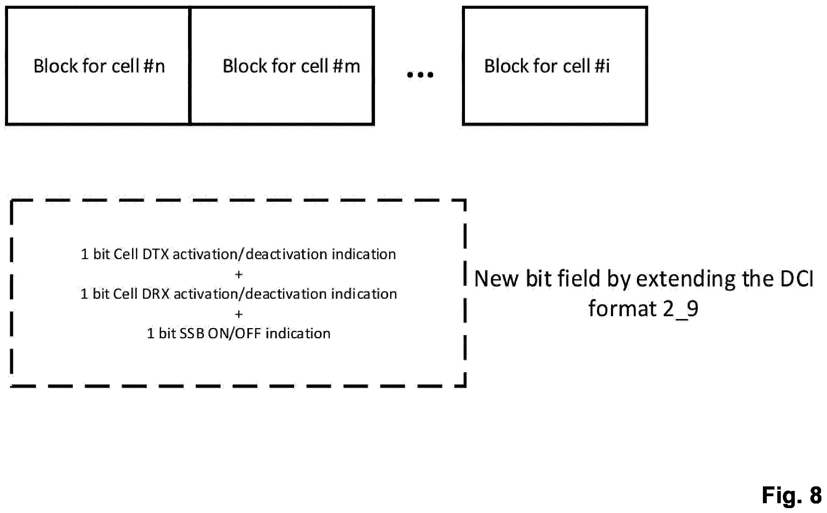

An example is shown in **Fig. 8** where the indication is provided as a new 1 bit field in addition in a DCI format based on DCI format 2_9, which already provides 1 bit indications of cell DTX and, respectively, DRX activation/deactivation for a cell. As is further shown in Fig. 8, the signal may comprise a plurality of blocks providing ON/OFF indications of settings respectively for each of a plurality of cells.

"Discontinuous Reception" (DRX) refers to a configuration of non-active periods in which the UE does not need to monitor transmission occasions for a downlink signal during a non-active period and thus can save power. Such signals may include, but are not restricted to periodic/Semi-persistent CSI-RS (including TRS (tracking reference signal)), PRS (positioning reference signal), PDCCH or SPS (semi-persistent scheduling) PDSCH (physical downlink shared channel).

"Discontiuous transmission" (DTX) refers to a configuration where the UE is expected not to transmit uplink signals due to a non-active period and thus save power. Non-limiting examples of uplink signals include scheduling requests (SR), Periodic/Semi-persistent CSI report, Periodic/Semi-persistent SRS (sounding reference signals) and configured grant (CG) PUSCH (physical uplink shared channel).

After the UE receives the PDCCH with the ON/OFF indication, for the common-signal or transmission occasion, and based on the indication, the UE determines whether and when to assume that the SSB is available and/or not available for the indicated SCell(s), e.g. whether and when the SSB is available for time/ frequency synchronization and/or L1/L3 measurements. For instance, after receiving the indication, starting from a timing offset or delay a time instance or time instances for receiving the common signal or transmission occasion(s) may be configured beforehand and used when being indicated available or activated.

A dynamic indication of SSB (or other common signal/TO) ON/OFF indication using e.g. layer 1 (physical layer) signaling such as PDCCH may facilitate dynamic network saving operation and thereby provide energy saving gain.

Furthermore, if group-common signaling such as PDCCH is used, this may save system overhead.

In the following, an example of a combination of indicated settings is provided where the UE receives a PDCCH or other signal indicating SCell indices and, for the indicated one or more SCell(s), one or both of SSB ON/OFF indication (indicating whether an SSB or other common signal or transmission occasion is available for the cell) and/or SCell activation/deactivation (indicating whether the cell is activated or deactivated).

As mentioned, when a previously configured SCell is activated, the resource or resources in the SCell can be used by the UE for data and/or control channels and other signals as per configuration, for data transmission, reception, and/or measurement.

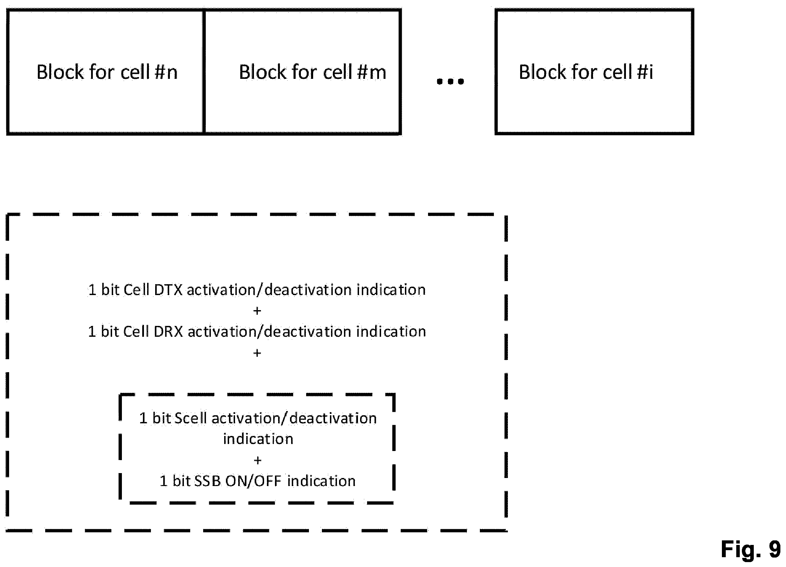

Similar to the aforementioned example, the PDCCH may be a new DCI (downlink control information) format, or it may be an extension of an existing format, possibly a DCI format for a group-common PDCCH, such as DCI formats DCI format 2_0, 2_6, 2_7, 2_9, or DCI format 0_1 (for paging). Alternatively, the PDCCH may be a UE-specific DCI format. Exemplary extensions of DCI format 2_9 are shown in **Figs. 9-12****.** It is noted that this DCI format is shown as an example, and the signal in general need not include DTX / DRX activation indications.

After the UE receives the PDCCH with the ON/OFF indication for the common-signal or transmission occasion and SCell activation/or deactivation, the UE determines, based on the indication, whether and when to assume that the SSB is available and/or not available for the indicated SCell(s), e.g. whether and when the SSB is available for time/frequency synchronization and/or L1/L3 measurements. The UE further determines whether and when to activate or deactivate the SCell. For instance, after receiving the indication, starting from a timing offset or delay, a time instance or time instances for receiving the common signal or transmission occasion(s) or for activating / deactivating the SCell(s) may be configured beforehand and used when being indicated available or activated.

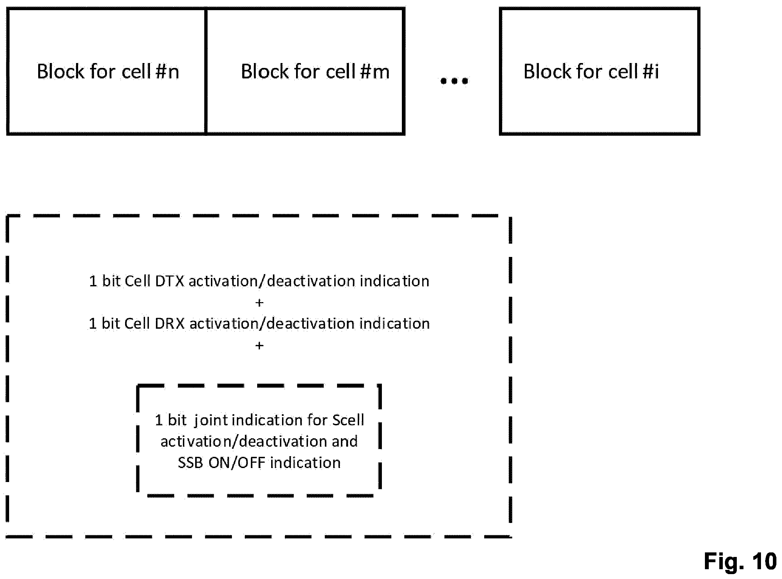

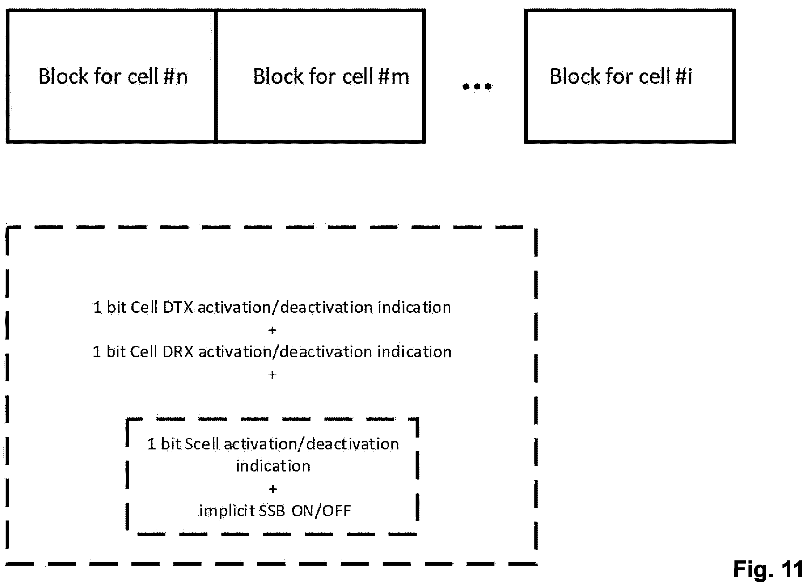

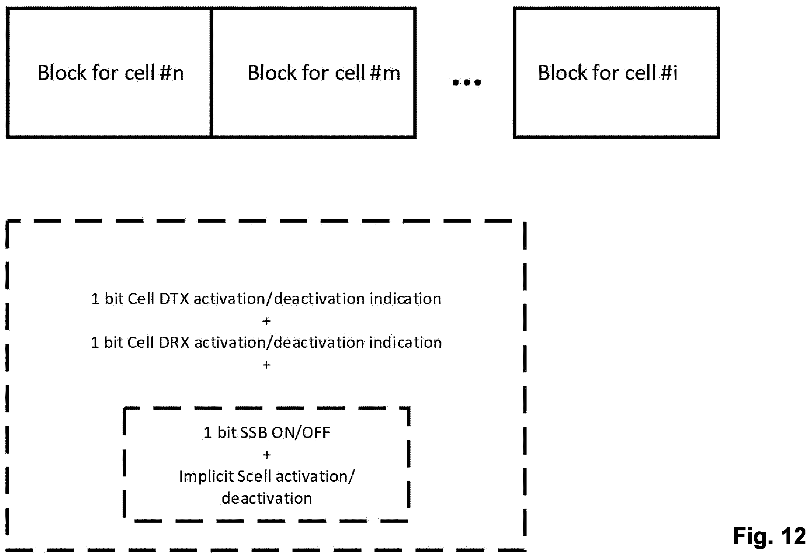

As mentioned above, the SSB or other common signal/TO ON/OFF indication and the SCell activation/deactivation may be either separately indicated, e.g. as separate 1-bit fields as shown in Fig. 9. Alternatively, as shown in Figures 10 to 12, the common signal/TO ON/OFF indication and the SCell activation/deactivation may be jointly indicated. The following interpretations are possible: SSB ON/OFF and the SCell activation/deactivation are explicitly indicated, as shown in **Fig. 10****.** Although in Fig. 10 a 1-bit field is shown, this explicit indication may have two bits, to enable different combinations including those where both settings are ON/active and where one setting is activated and the other one is switched OFF or deactivated. Alternatively, as shown in **Fig. 11****,** SSB (or common signal/TO) ON/OFF indication may implicitly indicate SCell activation/deactivation (e.g. using a joint 1-bit indication). Alternatively, as shown in **Fig. 12****,** SCell activation/deactivation may implicitly indicate SSB (or common signal or TO) ON/OFF.

Similar to the previous example, dynamic indication of SSB (or other common signal/TO) ON/OFF indication using e.g. layer 1 (physical layer) signaling such as PDCCH may facilitate dynamic network saving operation and thereby provide energy saving gain.

Furthermore, if group-common signaling such as group-common PDCCH is used, this may save system overhead.

Moreover, joint design of common signal or transmission occasion ON/OFF indication with SCell activation or deactivation may provide for a simplified or clearly arranged system design. On the other hand, separate design of common signal or transmission occasion ON/OFF from SCell ON/OFF indication may provide flexibility in the different settings and allow for SCells being detectable with common signals (e.g., SSB) being transmitted for UEs to measure while not activated and without scheduling any DL/UL traffic.

According to a further example, the UE may receive an indication or a plurality of indications (e.g. in a PDCCH) indicating one or both of common signal ON/OFF indication (e.g. indicating whether an SSB or other common signal or transmission occasion is available for the cell) and/or SCell dormancy indication e.g. switching of dormancy-like and non-dormancy like behavior. For instance, the UE may receive a PDCCH (or MAC CE, RRC signaling, or other signal) indicating an index or indices of one or a plurality of SCell(s) and, for each of the indicated SCell(s), one or both of SSB ON/OFF indication and/or Cell dormancy indication. As in the previous examples, instead of the SSB, availability of another common signal or transmission occasion may be switched ON or OFF.

"Dormancy-like behavior" means that, in an activated SCell, UE does not monitor PDCCH but only reports periodic CSI as per configuration. "Non-dormancy-like behavior" means that, in an activated SCell, UE needs to monitor PDCCH and also report periodic CSI.

For a combination of common signal or TO ON/OFF indication with (non-)dormancy indication, a PDCCH may be used that is based on an extension or an enhancement of a DCI format that indicates dormancy for SCell(s), e.g. group-common DCI-format 2_6 or UE-specific DCI format 1_0 or 2_1.

After the UE receives the PDCCH with the ON/OFF indication for the common-signal or transmission occasion and the dormancy indication, the UE determines, based on the indication, whether and when to assume that the SSB is available and/or not available for the indicated SCell(s), e.g. whether and when the SSB is available for time/frequency synchronization and/or L1/L3 measurements. The UE further determines whether the indicated SCell or SCells are dormant or non-dormant.

Similar to the previous example, SSB (or other signal/TO) ON/OFF indication and SCell dormancy may be separately indicated (e.g. by separate 1-bit fields) or jointly indicated. Joint indication includes the following options: One option is that SSB (or common signal or TO) ON/OFF and the SCell dormancy are explicitly indicated by a common bit field (e.g. 2 bits). Another option is that SSB ON/OFF indication for SSB (or other signal) is implicitly indicated by SCell dormancy indication. For example, for non-dormancy-like behavior, the SSB transmission is assumed to be ON/activated, and for dormancy-like behavior, the SSB is assumed to be OFF/deactivated.

Similar to the previous examples, dynamic indication of SSB (or other common signal/TO) ON/OFF indication using e.g. layer 1 (physical layer) signaling such as PDCCH may facilitate dynamic network saving operation and thereby provide energy saving gain.

Furthermore, if group-common signaling such as group-common PDCCH is used, this may save system overhead.

Moreover, joint design of common signal or transmission occasion ON/OFF indication with dormancy indication may reduce specification impact and save system overhead, as SSB can be OFF when UE does not need to monitor PDCCH in dormant SCell.

As already mentioned, another example of a combination of the common signal (or transmission occasion) ON/OFF indication with another signal is combining the SSB ON/OFF indication with Cell DTX ON/OFF indication.

For instance, the UE may receive a PDCCH (or MAC CE, RRC signaling, or other signal) indicating an index or indices of one or a plurality of SCell(s) and, for each of the indicated SCell(s), one or both of SSB ON/OFF indication and/or cell DTX (and/or DRX) activation/deactivation. As in the previous examples, instead of the SSB, availability of another common signal or transmission occasion may be switched ON or OFF.

As an example, similar to **Fig. 8****,** a PDCCH may be a reuse, extension or enhancement of DCI format 2_9.

After the UE receives the PDCCH with the ON/OFF indication for the availability of SSB (or other common-signal or transmission occasion) and the Cell DTX or DRX activation/deactivation, the UE determines, based on the indication, whether and when to assume that the SSB is available and/or not available for the indicated SCell(s), e.g. whether and when the SSB is available for time/frequency synchronization and/or L1/L3 measurements. The UE further determines whether and when to activate cell DTX and/or DRX. For instance, active time of DTX and/or DRX may be RRC configured and activated by PDCCH.

Similar to the previous examples, the common signal ON/OFF indication and the SSB ON/OFF indication may be separately indicated, e.g. by separate bits in a PDCCH. Such a PDCCH may correspond to the above-described example illustrated in **Fig. 8****.**

Alternatively, as with the previous examples and embodiments, there may be joint indication of common signal or TO availability and cell DTX or DRX.

For the joint indication, e,g, using a 1 bit indicator in the PDCCH or other signaling, the following exemplary interpretation is possible:
- When Cell DTX is activated and outside the active time of Cell DTX, SSB is assumed OFF.
- When Cell DTX is activated and in the active time of Cell DTX, SSB is assumed ON.
- When Cell DTX is deactivated, SSB is assumed ON.

Instead of SSB, the interpretations may be applied to other common signals e.g. SIB1, or transmission occasions for uplink signals.

Also with the present example, dynamic indication of SSB (or other common signal/TO) ON/OFF indication using e.g. layer 1 (physical layer) signaling such as PDCCH may facilitate dynamic network saving operation and thereby provide energy saving gain.

Moreover, joint signal design of common signal /TO availability indication with cell DTX/DRX indication may allow for a simplified or clearly arranged system design and reduced specification impact. On the other hand, separate design of common signal /TO availability indication with cell DTX/DRX indication may allow for flexibility in controlling DDT and common signals.

According to another example, the UE may receive an indication, e.g. via PDCCH, indicating one or both of:
- whether a common signal or a transmission occasion is available for a cell (e.g. SSB ON/OFF) and/or
- whether SSB-less operation in the cell is activated or deactivated.

The indication may be made for each of one or more SCells and may further include the index or indices of the SCells.

For the SSB-less operation to be activated, the applicable SSB reference cell may be configured in advance, e.g. by RRC signaling.

Alternatively, the applicable SSB reference cell may be explicitly indicated in the indication, e.g. in the PDCCH. In this case, as also mentioned above, the PDCCH or other indication of SSB-less operation may include an index of a reference cell where the SSB as a common signal is to be made available, or a reference cell where a transmission occasion is made available.

If the indication is included in a PDCCH, the PDCCH may be either a new DCI format or extension/enhancement based on exist group common, e.g., DCI format 2_0/2_6/2_7/2_9/DCI format 0_1 (for paging), or a UE specific DCI format.

After receiving the indication, the UE may then determine, based on the indication, whether to assume that the SSB is available or not available for the indicated SCell(s) and whether to activate or deactivate SSB-less operation. Additionally or alternatively, depending on whether one or both of SSB ON/OFF switching and/or SSB-less operation (de-)activation is indicated, the UE may further determine whether to activate or deactivate SCell SSB-less operation.

In addition, the UE may determine, based on the received indication or based on (RRC-) configuration, where the SSB will be made available: either in the SCell itself or, in the case of SSB-less operation, in the applicable reference cell for SSB.

Similar to the previous examples of combined indications, the ON/OFF indication for the common signal and SCell SSB-less indication may be separately or jointly indicated.

In a joint indication, e.g. a one-bit indicator, indication of common signal as not available (e.g. SSB switched OFF) may implicitly mean that the SCell SSB-less operation is deactivated, and indication of the common signal as being made available (SSB switched ON) may implicitly mean that the SCell SSB-less operation is activated.

In the present embodiment, using a L1 indication such as PDCCH may facilitate dynamic network energy saving operation and thereby enable enhancing energy saving gain.

Furthermore, for a combination of SSB ON/OFF switching with SCell SSB-less operation, the specification impact and system overhead may be mitigated, and system operation simplified. Moreover, the network side may enjoy both NES gain (by SSB OFF switching) and flexibility in scheduling traffic (by SSB-less operation).

As mentioned above, a reference cell index may be included in a PDCCH or in another indication of common signal availability or SSB-less operation.

For instance, the UE may receive a PDCCH indicating SCell indices indicating one or more SCells and, for each indicated SCell, one or both of an ON/OFF indication of the SSB and a reference cell index of the reference cell where the SSB is transmitted for the respective SCell.

As further mentioned above, candidates of reference cell indices for an SCell with SSB-less operation may for instance be RRC configured.

The PDCCH may for instance be a new DCI format or extension or enhancement based on existing group common formats, such as DCI format 2_0, 2_6, 2_7, 2_9 or DCI format 0_1 (for paging). Alternatively, the PDCCH may be a UE specific DCI format.

After the UE receives the PDCCH, and based on the indication, the UE determines, based on the indication(s) in the PDCCH, whether to assume the SSB is available and/or not available for the indicated SCell(s) for time/frequency synchronization, and/or L1/L3 measurements, and which cell is the reference cell where the SSB can be received for the SSB-less cell.

With an L1 indication such as PDCCH, a dynamic indication of SSB ON/OFF switching and/or reference cell switching is provided that may facilitate dynamic network energy saving operation thus facilitate enhancing the energy saving gain.

Moreover, a combined signaling of reference cell switching with SCell SSB-less operation may mitigate the specification impact and system overhead and allow for efficient and simplified system operation.

Furthermore the indication of a reference cell index may facilitate providing additional flexibility for NES operation.

In the foregoing embodiments and examples, an explicit indication of availability of a common signal, activation of SSB-less operation, and/or other settings such as SCell activation have been provided.

In some of the examples described above, a PDCCH as a L1-based indication is used as an indication from the gNB as to whether a common signal or a transmission occasion is available. However, as has been mentioned, the indication may be carried by L2 MAC CE or by higher-layer signaling such as RRC. While L1 based indication facilitates dynamic and quick signaling, L2 or higher-layer signaling may provide a reliable indication.

In addition to the above-described explicit indication, the present disclosure provides embodiments where availability of a common signal or and/or Scell activation/deactivation is indicated by the common signal itself.

In some embodiments, the UE receives the common signal on a configured monitoring occasion, and determines that the common signal is available within a time window associated with the configured monitoring occasion.

As an example of the common signal, the SSB itself may indicate SSB availability (ON or OFF) and/or SCell activation or deactivation.

For instance, the UE may monitor or detect the transmission of the SSB in a monitoring occasion or monitoring occasions configured e.g. by SIB or RRC.

If the SSB is detected by UE in the configured monitoring occasion(s), UE shall assume the SSB is available within the time window/frame associated with the monitoring occasion(s).

Optionally, if SSB is detected by UE in the configured monitoring occasions, UE may further assume that the SCell where SSB is monitored is activated within a time window/frame associated with the monitoring occasion. More generally, if the common signal is received on the configured monitoring occasion, the UE may determine that the cell is activated.

If the SSB is not detected by the UE in the configured monitoring occasion(s), UE shall assume the SSB is not available within the time window/frame associated with the monitoring occasion(s).

Optionally, if the SSB is not detected by UE in the configured monitoring occasions, the UE shall assume the SCell where SSB is monitored is deactivated within the time window/frame associated with the monitoring occasion. More generally, if the common signal is not received on the configured monitoring occasion, the UE may determine that the cell is not activated.

With an indication of common signal availability and optionally SCell activation and deactivation by the common signal itself, the indication may be made in a simple and efficient manner with little specification impact and low system overhead.

A further possibility for On/OFF indication of a common signal such as SSB or system information is implicit indication, which described in the following.

In particular, the UE may assume that "the required SSB", or the required SIB1 or other common signal, is available in time monitoring occasions associated reception occasions or transmission occasions of an uplink or downlink (or sidelink) transmission. Examples of channels for such uplink or downlink transmissions include PDCCH, PDSCH, PUSCH, SRS, PRACH and/or measurement reference resource of SSB.

Accordingly, if any of the above-mentioned uplink or downlink transmissions is configured or scheduled to be performed on certain transmission occasions, the UE knows that a required common signal is available on monitoring occasions configured for the common signal. The "required" common signal may be required for error-free or high-quality performance of such transmission or reception, e.g. by providing a necessary synchronization and/or by allowing for necessary channel measurements.

In such a case, the UE receives from the gNB the resource assignment (e.g. a scheduling grant, a dynamic or configured grant) for the uplink or downlink transmission as the indication of availability of the "required" common signal. The common signal is determined by the UE to be available on a configured monitoring occasion associated with the uplink or downlink transmission and prior to the uplink or downlink transmission (i.e. reception of the required signal precedes the uplink or downlink transmission in time).

The SSB may be then available in a time window, and parameters of the time window may be either configured (e.g. by SSB or system information) or fixed (e.g. by specification) and used by the UE and gNB to calculate the time window based on the transmission or reception occasion of the uplink or downlink transmission such as PDCCH, PDSCH, PUSCH, SRS, PRACH and/or measurement reference resource of SSB. For instance, if the UE is notified by the gNB of the occasions for the uplink or downlink transmission, the UE may determine the time window including the SSB monitoring occasions based on an association (e.g. a rule) between SSB monitoring occasions and uplink or downlink transmission occasions that is known to both the UE and to the gNB.

The monitoring occasions for the "required SSB" may include a subset of legacy configured SSB occasions (e.g. configured by SIB1), which may be limited by the time window, and/or additional or extended SSB occasions not limited by the legacy SSB occasions. Such additional or extended occasions may also be configured by system information such as SIB1.

For other SSB monitoring occasions (such as the SIB configured "legacy" SSB occasions) other than the "required SSB" monitoring occasions, whether to transmit SSB or not is up to network decision. UE may not always assume such other SSBs to available.

With implicit SSB availability indication, as described above, no additional dynamic signaling of SSB ON/OFF indication is required, and signaling overhead may thus be saved. Furthermore, it may be facilitated for the network to reduce or minimize the transmission of SSBs.

Furthermore, the above mentioned examples, even when describing the indication of availability of SSB, may also be applied to indication of availability of other common signals such as a synchronization signal, a reference signal or system information. Examples for such common signal include SIB1 and other common channels or signals such as paging monitoring occasions and PRACH (transmission) occasions.

Furthermore, the above-described techniques and signaling for SSB ON/OFF availability switching are applicable to CSI-RS ON/OFF switching.

Moreover, when SSB is switched OFF, the gNB and UE may use CSI-RS instead of SSB for time/frequency synchronization and for measurement such as channel quality measurement.

As described above, the present disclosure provides techniques where the UE receives the indication from gNB regarding the on-demand SSB availability and/or other switchable settings for one or more cells.

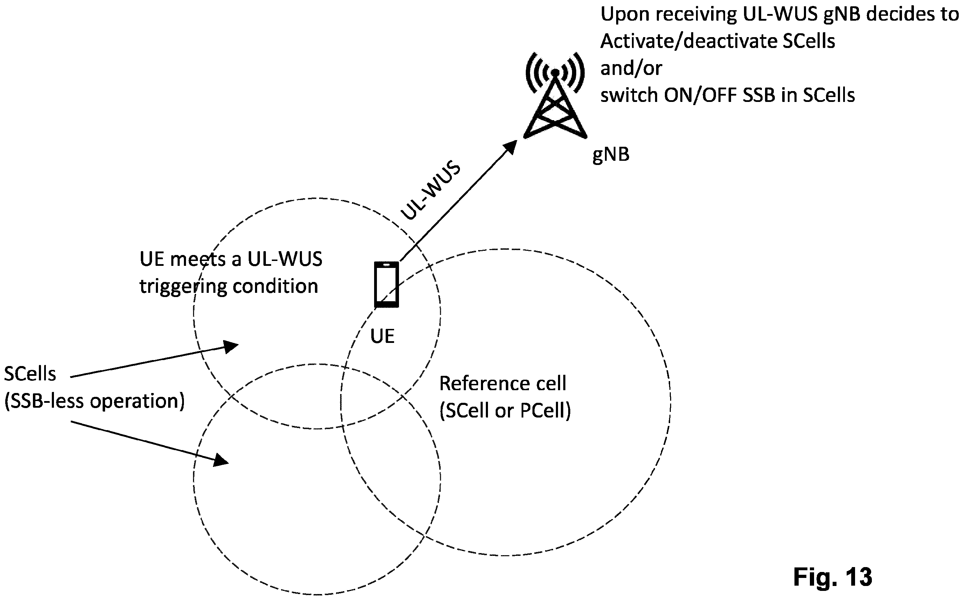

It is further noted that the UE may request the gNB to transmit the on-demand SSB or activate an SCell or SCells. As illustrated in **Fig. 13****,** a wake-up signal (WUS) may be used for such a request from the UE. Further, such a request may be based on one or more triggering conditions such as traffic status, buffer status, and/or (layer 1 or layer 3) measurement results. However, the network-side triggering conditions of the present disclosure work independently of whether a request is received from the UE and how this request is designed.

### RRC connection setup and reconfiguration procedures

Interactions between a UE, gNB, and AMF (an 5GC entity) in the context of a transition of the UE from RRC_IDLE to RRC_CONNECTED for the NAS part are described(see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

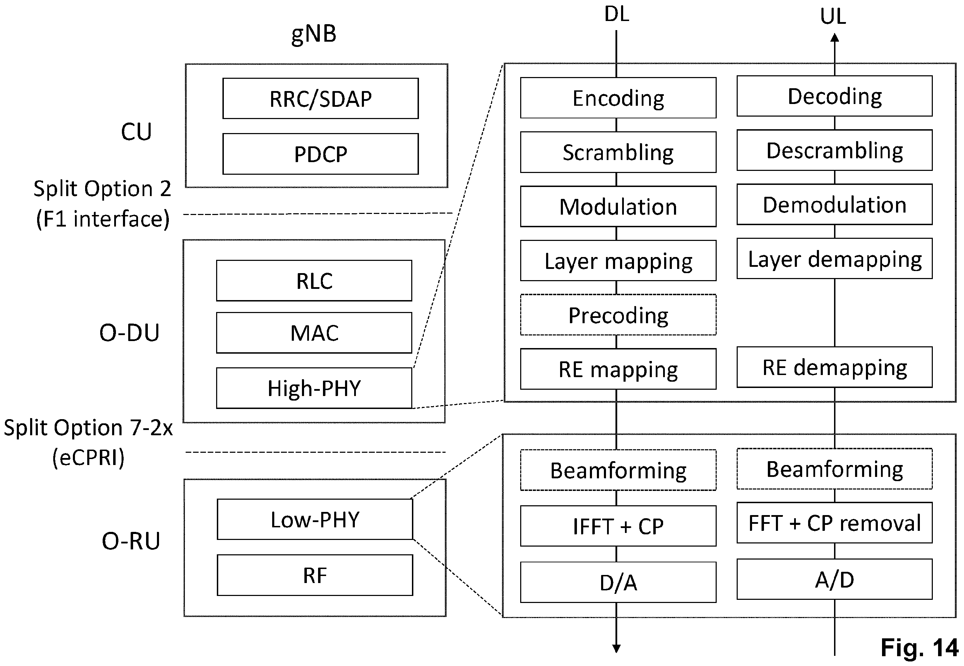

FIG. 14 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD: Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

According to a first aspect, provided is a communication apparatus comprising:
a receiver which, in operation, receives an indication indicating:
   - whether a common signal or a transmission occasion is available for a cell,
   - whether the cell is activated or deactivated, or
   - whether SSB-less operation in the cell is activated or deactivated;
and circuitry which, in operation, determines, based on the received indication, whether the common signal or the transmission occasion is available for the cell or whether activation of the cell or SSB-less operation is initiated or extended.

According to a second aspect, which may be provided in combination with the first aspect, the receiver, in operation, receives the indication including a cell index of the cell.

According to a third aspect, which may be provided in combination with the first or second aspects, the receiver, in operation, receives, as the indication, a plurality of indicators and each indicating one out of:
- whether or not the common signal or the transmission occasion is available for the cell,
- whether the cell is activated or deactivated,
- whether SSB-less operation in the cell is activated or deactivated,
- whether the cell is dormant or non-dormant, or
- whether discontinuous transmission or reception in the cell is activated or deactivated.

According to a fourth aspect, which may be provided in combination with the second aspect, the indication is a joint indicator jointly indicating at least two out of:
- whether or not the common signal or the transmission occasion is available for the cell,
- whether the cell is activated or deactivated,
- whether SSB-less operation in the cell is activated or deactivated,
- whether the cell is dormant or non-dormant, or
- whether discontinuous transmission or reception in the cell is activated or deactivated.

According to a fifth aspect, which may be provided in combination with any one of the first to fourth aspects, the indication includes a reference cell index of a reference cell where the common signal is to be received or the transmission occasion is made available.

According to a sixth aspect, which may be provided in combination with any one of the first to fifth aspects, the receiver, in operation, receives a physical downlink control channel (PDCCH), a medium access control (MAC) control element, or radio resource control (RRC) signaling including the indication.

According to a seventh aspect, which may be provided in combination with any one of the second to sixth aspects, the receiver, in operation, receives the PDCCH including the indication, the PDCCH being a group-common PDCCH or a PDCCH specific to the communication apparatus.

According to an eighth aspect, which may be provided in combination with the first aspect,
if the receiver, in operation, receives, as the indication, the common signal on a configured monitoring occasion, the circuitry, in operation, determines that the common signal is available within a time window associated with the configured monitoring occasion.

According to a ninth aspect, which may be provided in combination with the eighth aspect, if the receiver, in operation, receives the common signal on the configured monitoring occasion, the circuitry, in operation, determines that the cell is activated.

According to a tenth aspect, which may be provided in combination with the first aspect, the receiver, in operation, receives, as the indication, a resource assignment for an uplink or downlink transmission, and the circuitry, in operation, determines that the common signal is available on a configured monitoring occasion associated with the uplink or downlink transmission, the configured monitoring occasion being prior to a resource assigned to the uplink or downlink transmission.

According to an eleventh aspect, which may be provided in combination with any one of the first to tenth aspects, the common signal is a synchronization signal, a reference signal, a control signal, or system information.

According to a twelfth aspect, which may be provided in combination with any one of the first to eleventh aspects, the cell is a secondary cell.

According to a thirteenth aspect, provided is a base station comprising circuitry which, in operation, determines whether to make available a common signal or a transmission occasion for a cell or whether to initiate or extend activation of the cell or SSB-less operation in the cell; and a transmitter which, in operation, transmits an indication indicating:
- whether the common signal or the transmission occasion is available for the cell,
- whether the cell is activated or deactivated, or
- whether SSB-less operation in the cell is activated or deactivated.

According to a fourteenth aspect, which may be provided in combination with the thirteenth aspect, the transmitter, in operation, transmits the indication including a cell index of the cell.

According to a fifteenth aspect, which may be provided in combination with the thirteenth or fourteenth aspects, the transmitter, in operation, transmits, as the indication, a plurality of indicators and each indicating one out of:
- whether or not the common signal or the transmission occasion is available for the cell,
- whether the cell is activated or deactivated,
- whether SSB-less operation in the cell is activated or deactivated,
- whether the cell is dormant or non-dormant, or
- whether discontinuous transmission or reception in the cell is activated or deactivated.

According to a sixteenth aspect, which may be provided in combination with the fourteenth aspect, the indication is a joint indicator jointly indicating at least two out of:
- whether or not the common signal or the transmission occasion is available for the cell,
- whether the cell is activated or deactivated,
- whether SSB-less operation in the cell is activated or deactivated,
- whether the cell is dormant or non-dormant, or
- whether discontinuous transmission or reception in the cell is activated or deactivated.

According to a seventeenth aspect, which may be provided in combination with any one of the thirteenth to sixteenth aspects, the indication includes a reference cell index of a reference cell where the common signal is to be transmitted or the transmission occasion is made available.

According to an eighteenth aspect, which may be provided in combination with any one of the thirteenth to seventeenth aspects, the transmitter, in operation, transmits a physical downlink control channel (PDCCH), a medium access control (MAC) control element, or radio resource control (RRC) signaling including the indication.

According to a nineteenth aspect, which may be provided in combination with any one of the thirteenth to eighteenth aspects, the transmitter, in operation, transmits the PDCCH including the indication, the PDCCH being a group-common PDCCH or a PDCCH specific to a communication apparatus.

According to an twentieth aspect, which may be provided in combination with the first aspect, if the circuitry, in operation, determines the common signal to be available within a time window associated with the configured monitoring occasion, the transmitter, in operation, transmits, as the indication, the common signal on a configured monitoring occasion.

According to a twenty-first aspect, which may be provided in combination with the twentieth aspect, if the circuitry, in operation, determines that the cell is to be activated, the transmitter, in operation, transmits the common signal on the configured monitoring occasion.

According to a twenty-second aspect, which may be provided in combination with the thirteenth aspect, the circuitry, in operation, determines that the common signal is available on a configured monitoring occasion associated with the uplink or downlink transmission, the configured monitoring occasion being prior to a resource assigned to the uplink or downlink transmission, and the transmitter, in operation, transmits, as the indication, a resource assignment for an uplink or downlink transmission.

According to a twenty-third aspect, which may be provided in combination with any one of the thirteenth to twenty-second aspects, the common signal is a synchronization signal, a reference signal, a control signal, or system information.

According to a twenty-fourth aspect, which may be provided in combination with any one of the thirteenth to twenty-third aspects, the cell is a secondary cell.

According to a twenty-fifth aspect, provided is a method for a communication apparatus, comprising: receiving an indication indicating:
- whether a common signal or a transmission occasion is available for a cell,
- whether the cell is activated or deactivated, or
- whether SSB-less operation in the cell is activated or deactivated;
and determining, based on the received indication, whether the common signal or the transmission occasion is available for the cell or whether activation of the cell or SSB-less operation is initiated or extended.

The method according to the twenty-fifth aspect may be provided in combination with aspects corresponding to any one of the second to twelfth aspects.

According to a twenty-sixth aspect, provided is a method for a base station, comprising: determining whether to make available a common signal or a transmission occasion for a cell or whether to initiate or extend activation of the cell or SSB-less operation in the cell; and transmitting an indication indicating:
- whether the common signal or the transmission occasion is available for the cell,
- whether the cell is activated or deactivated, or
- whether SSB-less operation in the cell is activated or deactivated.

The method according to the twenty-sixth aspect may be provided in combination with aspects corresponding to any one of the fourteenth to twenty-fourth aspects.

According to a twenty-seventh aspect, provided is an integrated which, in operation, causes a communication apparatus to carry out the steps of the twenty-fifth aspect.

According to a twenty-eighth aspect, provided is an integrated which, in operation, causes a base station to carry out the steps of the twenty-fifth aspect.

According to a twenty-ninth aspect, provided is a computer-readable medium storing instructions which, when executed by a processor of a communication apparatus, causes the communication apparatus to carry out the steps of the twenty-fifth aspect.

According to a thirtieth aspect, provided is a computer-readable medium storing instructions which, when executed by a processor of a base station, causes the communication apparatus to carry out the steps of the twenty-sixth aspect.

## Claims

1. A communication apparatus comprising:
a receiver which, in operation, receives an indication indicating:
• whether a common signal or a transmission occasion is available for a cell,
• whether the cell is activated or deactivated, or
• whether SSB-less operation in the cell is activated or deactivated;
and
circuitry which, in operation, determines, based on the received indication, whether the common signal or the transmission occasion is available for the cell or whether activation of the cell or SSB-less operation is initiated or extended.

2. The communication apparatus according to claim 1, wherein the receiver, in operation, receives the indication including a cell index of the cell.

3. The communication apparatus according to claim 1 or 2, wherein the receiver, in operation, receives, as the indication, a plurality of indicators and each indicating one out of:
• whether or not the common signal or the transmission occasion is available for the cell,
• whether the cell is activated or deactivated,
• whether SSB-less operation in the cell is activated or deactivated,
• whether the cell is dormant or non-dormant, or
• whether discontinuous transmission or reception in the cell is activated or deactivated.

4. The communication apparatus according to claim 2, wherein the indication is a joint indicator jointly indicating at least two out of:
• whether or not the common signal or the transmission occasion is available for the cell,
• whether the cell is activated or deactivated,
• whether SSB-less operation in the cell is activated or deactivated,
• whether the cell is dormant or non-dormant, or
• whether discontinuous transmission or reception in the cell is activated or deactivated.

5. The communication apparatus according to any one of claims 1 to 4, wherein the indication includes a reference cell index of a reference cell where the common signal is to be received or the transmission occasion is made available.

6. The communication apparatus according to any one of claims 1 to 5, wherein the receiver, in operation, receives a physical downlink control channel (PDCCH), a medium access control (MAC) control element, or radio resource control (RRC) signaling including the indication.

7. The communication apparatus according to any one of claims 2 to 6, wherein the receiver, in operation, receives the PDCCH including the indication, the PDCCH being a group-common PDCCH or a PDCCH specific to the communication apparatus.

8. The communication apparatus according to claim 1, wherein,
if the receiver, in operation, receives, as the indication, the common signal on a configured monitoring occasion, the circuitry, in operation, determines that the common signal is available within a time window associated with the configured monitoring occasion.

9. The communication apparatus according to claim 8, wherein,
if the receiver, in operation, receives the common signal on the configured monitoring occasion, the circuitry, in operation, determines that the cell is activated.

10. The communication apparatus according to claim 1, wherein the receiver, in operation, receives, as the indication, a resource assignment for an uplink or downlink transmission, and the circuitry, in operation, determines that the common signal is available on a configured monitoring occasion associated with the uplink or downlink transmission, the configured monitoring occasion being prior to a resource assigned to the uplink or downlink transmission.

11. The communication apparatus according to any one of claims 1 to 10, wherein the common signal is a synchronization signal, a reference signal, a control signal, or system information.

12. The communication apparatus according to any one of claims 1 to 11, wherein the cell is a secondary cell.

13. A base station comprising:
circuitry which, in operation, determines whether to make available a common signal or a transmission occasion for a cell or whether to initiate or extend activation of the cell or SSB-less operation in the cell; and
a transmitter which, in operation, transmits an indication indicating:
• whether the common signal or the transmission occasion is available for the cell,
• whether the cell is activated or deactivated, or
• whether SSB-less operation in the cell is activated or deactivated.

14. A method for a communication apparatus, comprising:
receiving an indication indicating:
• whether a common signal or a transmission occasion is available for a cell,
• whether the cell is activated or deactivated, or
• whether SSB-less operation in the cell is activated or deactivated;
and
determining, based on the received indication, whether the common signal or the transmission occasion is available for the cell or whether activation of the cell or SSB-less operation is initiated or extended.

15. A method for a base station, comprising:
determining whether to make available a common signal or a transmission occasion for a cell or whether to initiate or extend activation of the cell or SSB-less operation in the cell; and
transmitting an indication indicating:
• whether the common signal or the transmission occasion is available for the cell,
• whether the cell is activated or deactivated, or
• whether SSB-less operation in the cell is activated or deactivated.
